# EUROPEAN PATENT APPLICATION

(11) **EP 0 611 984 A1**
(43) Date of publication of application: **24.08.1994**
(21) Application number: 94200356.7
(22) Date of filing: 10.02.1994
(51) Int. Cl.: G03B 27/73

(54) **System of measuring images on photgraphic films**

(30) Priority: 17.02.1993 IT PN930009
(71) Applicant: SAN MARCO IMAGING s.r.l., I-33080 Fiume Veneto (Pordenone) (IT)
(72) Inventor: Fracas, Franco, I-33170 Pordenone (IT); Pretto, Livio, I-33080 Porcia (Pordenone) (IT); Cecco, Tonino, I-33072 Casarsa della Delizia(Pordenone) (IT); Scodellaro, Eni, I-33097 Spilimbergo (Pordenone) (IT)
(74) Representative: Da Riva, Ermanno

(57) **Abstract**

A system of measuring the densities of images on photographic films, comprising a conventional projection unit, in which a measuring device (7) is mounted slidably between the film (6) and the lens (9), capable of longitudinal movement in relation to the film and equipped with a plurality of light-transducing elements (74) arrayed in mutual alignment transversely to the image (I) and positioned to receive respective quantities of light from discrete portions (ZP) of a transverse reading zone (Z), which are admitted through a slot (72), reflected by a mirror (71) and focused by a lens (75). With the measuring device (7) translating longitudinally, such that the slot (72) can cover the image (I) progressively and in its entirety, the single values sensed by the light-transducing elements (74) are fed into an electronic processor (C) and processed together with other data in such a way as to determine the filtration and illumination parameters governing reproduction of the image (I).

## Description

The present invention relates to an optoelectronic system by which images recorded on photographic films are measured and processed in such a way as to optimize subsequent printing.

The prior art embraces a variety of systems and devices for the analysis of photographic images on negative or positive films, of which use is made in effecting a suitable adjustment of the various parameters governing the photographic reproduction of such images.

There are systems, for example, in which analysis of the image is effected using television cameras disposed laterally in relation to the image, preceding the lens through which the image is projected onto the paper, or suitable photoelectronic sensors similarly disposed and wired to an electronic processor programmed to adjust the parameters governing reproduction with the end in view of obtaining as true a printed image as possible.

Such systems tend in general to be somewhat costly, especially those using television cameras; moreover, the particular positioning of the means which read the image will normally dictate not only a reduction in sensitivity, but also an imperfect view by reason of the lateral positioning.

Certain other conventional systems are characterized by even greater complexity and cost, namely those in which the lens is displaced to allow measurement of the image axially, utilizing analysis devices or suitable mirrors or other systems of relaying the image which are moved into the position occupied previously by the lens.

In one conventional system worthy of mention, the film is translated through a measuring station before being positioned at the projecting station, and exposed to an auxiliary light, or to light emitted by the projection apparatus itself and suitably diverted, which passes through the film and falls on a fixed device by which the resulting image values are relayed to an electronic processor; on the basis of internally programmed data, the processor then pilots the insertion of filters between the light source and the image projection system, as well as adjusting the illumination, so as to ensure adaptation to the density of the original film image and that of the photographic paper on which it is printed.

Such a system thus allows essentially of improving the quality of copies in relation to an original image, especially in the case of flash or backlit pictures, albeit the reading on which the analysis of the image is based must be effected with the film in movement, so that this is not a method well suited where the strips of film are limited in length, perhaps consisting even of an element with just one frame.

It would rather be more advantageous if the analysis of an image were to be effected with the film motionless and occupying the exact position assumed for projection and reproduction, and employing a device of minimized dimensions such as might comfortably occupy the limited space typically afforded between the support that holds the film and the lens beneath, notably in photographic printing machines of compact design.

The object of the present invention is to overcome the drawbacks and limitations described above; the stated object is realized with the system disclosed, wherein the film bearing an image for analysis is positioned motionless on the relative support and the measurement is effected by means of a suitable group of sensors arrayed in mutual alignment transversely to the image and mounted to a sliding support, which by translating longitudinally in relation to the film are able to effect a full analysis of the image and, with suitable data processing, pilot control and coordination of the various parameters governing the successive printing operation to the end of optimizing reproduction.

To allow a fuller appreciation of the features of the system disclosed and the advantages deriving therefrom, the system will now be described in detail, by way of example, with the aid of the accompanying drawings, in which:
- fig 1 is the schematic illustration of a device for implemention of the measuring system disclosed;
- fig 2 is a schematic side elevation illustrating a detail of fig 1, namely the moving assembly to which the measuring elements are mounted;
- fig 3 shows the moving assembly of fig 2 in plan and cut away in part.

Identical parts are indicated by a common number in the above drawings.

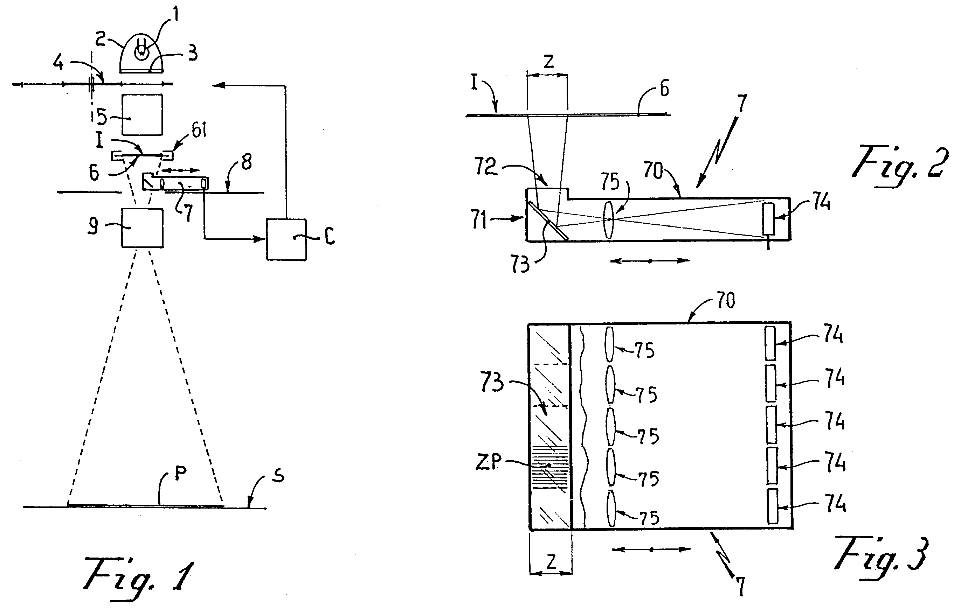

With reference in particular to fig 1, the essential components of a system according to the invention are:
a projection lamp 1 positioned internally of a relative parabolic reflector 2, a heat filter 3, a battery of colour filters 4, a condenser 5, the film 6 bearing an image I for reproduction, a support 61 in which the film 6 is carried, the measuring device 7, an optical assembly 9 comprising lens and shutter, also a sheet of light-sensitive paper P positioned on the printing surface S, and an electronic processor C.

As discernible in particular from figs 2 and 3, the measuring device 7 consists in a hollow structure or housing 70 mounted slidably on longitudinal guides and capable thus of movement parallel with the longitudinal dimension of the image I.

The housing 70 is completely enclosed except for one end, a reading end 71 embodied with a slot 72 disposed transversely to the image I positioned for analysis, and accommodates a mirror 73 (or a prism performing the same function) disposed immediately below the slot 72 and inclined at an angle of 45 to the horizontal plane occupied by the housing 70, from which a corresponding transverse zone Z of the image I above is reflected onto an array of light-transducing elements 74, passing through a corresponding array of lenses 75.

In this way, each of the light-transducing elements 74 receives luminous information relative to one discrete portion ZP of the transverse zone Z aforementioned. The area presented by one such discrete portion ZP is cross-hatched in fig 3, for the sake of clarity.

As already intimated, the entire measuring device 7 will be mounted on longitudinal guides not illustrated in the drawings, so as to allow its sliding movement beneath the film 6, and associated with a corresponding mechanical device (likewise not illustrated) which when activated will move the housing 70 longitudinally along the full length of the image I, thereby traversing the slot 72 from the edge of the image at which measurement commences, through to the opposite edge and back again.

There now follows a description of the manner in which a device thus embodied will operate.

In a first measurement step, during which the shutter of the lens assembly 9 remains closed, the measuring device 7 is invested with translatory motion in such a way that the slot 72 positions itself initially beneath one relative transverse edge of the image I and then continues to translate in the longitudinal direction along the entire length of the image; once the opposite edge has been reached, the movement is reversed and the slot 72 returns to its former position.

The light-transducing elements 74 are connected to the electronic processor C and timed to respond singly, in sequence, beginning with the element at one end of the array and terminating at the end opposite.

Accordingly, the reading of one complete transverse zone Z may be considered as being one relative "line".

Readings are repeated in this same manner at regular intervals of time, that is to say, with the measuring device 7 traversing longitudinally beneath the film and scanning the successive zones in a series of transverse sweeps, proceeding line by line until the entire image has been covered.

It will be observed, moreover, that the measurement can be effected not only during the forward travel of the measuring device 7 thus described, but also during the return travel, in such a way as to obtain a double set of readings that could be both useful and advantageous to the end of processing the photometric values sensed by the transducers.

The photometric values in question (pixels) are fed into the electronic processor C and duly processed as necessary, utilizing an appropriate software program and in accordance with other parameters programmed into the processor, such as those determining the type and quality of the paper selected for printing.

During the subsequent step of reproducing the image I, the measuring device 7 remains positioned outside the dimensional compass of the projection.

At this juncture the electronic processor C will pilot a selection of the colour filters 4 and determine the illumination, by way of suitable devices, and the image is projected onto the sheet of light-sensitive paper P, its reproduction thus optimized by the elimination of defects present in the original image, for example due to exposures typified by strong contrast such as those using flash or backlighting.

The light-transducing elements 74 might be monochrome, in which case the beam of light coming from the image I could be filtered in primary colours utilizing suitable filters interposed across the beam at varying points along its path, or alternatively, each of the single elements 74 might advantageously take the form of a device widely available through commercial channels, consisting in a cluster of three light-transducing elements each filtered in one primary colour.

Moreover, instead of a plurality of lenses 75 with one serving each light-transducing element 74, use might be made of a single spherical or cylindrical lens, and finally, the transmission of luminous information from the image I to the single light-transducing elements 74 might also be effected by an appropriate plurality of optical fibres.

It will be clear from the foregoing that the measuring device 7, in the solution disclosed, is advantageously slim in embodiment and thus able to occupy the limited space typically afforded between the lens assembly 9 and the support 61 carrying the film 6 in the compact type of photographic printing machines; moreover, the device features a marked simplicity in construction, reasonable cost and notable reliability, and is able to produce optimum results otherwise obtainable only from systems of considerably greater complexity and cost.

It will be appreciated that variations in embodiment might be applied to the individual features of the elements making up the device to which the invention relates, without by any means abandoning the scope of the foregoing specification and the references to the accompanying drawings, neither straying from within the bounds of protection afforded by the appended claims.

## Claims

1. A system of measuring images on photographic films to ensure their correct reproduction, utilizing a unit for the projection of images from film onto sheets of light-sensitive paper in the production of photographs, of the type widely employed in photographic printing machines, which comprises a light source consisting in a projection lamp (1) positioned within a parabolic reflector (2), a heat filter (3) associated with the reflector, a set of colour filters (4), a condenser (5), a support (61) in which to position the film (6) bearing an image (I) for reproduction, a lens (9) with a relative shutter, and a printing surface (S) on which to position the sheet of light-sensitive paper (P) destined to receive the projected image (I), all of which conventional in embodiment,
characterized
- in that it envisages the use of a measuring device (7) mounted below the level of the film (6) bearing the image (I) for reproduction and above the level of the lens (9), consisting in a hollow element (70) embodied with a slot (72) disposed transversely to the image, capable of sliding longitudinally in relation to the image (I) of the film (6) and accommodating a plurality of light-transducing elements (74) arrayed in mutual alignment transversely to the image (I), which are connected to an electronic processor (C) and in receipt of respective quantities of light, admitted through the slot (72), from discrete portions (ZP) of a transverse zone (Z) corresponding to the full width of the image (I) compassed by the slot (72);
- in that the measuring device (7) is invested with translatory motion in the longitudinal direction of the image (I) by suitable means of conventional embodiment in such a way that the slot (72) passes from the edge of the image (I) at which the measurement commences to the opposite edge, and is then returned to the initial position, remaining outside the dimensional compass of the beam from the image (I) which can thus be projected onto the sheet of light-sensitive paper (P);
- in that the light-transducing elements (74) are caused by the electronic processor (C) to respond in sequence beginning with a first element (74) at one end of the array and terminating with that at the opposite end, in such a way as to effect a photometric measurement of one corresponding transverse zone (Z), the selfsame sequence being repeated at predetermined and identical intervals of time simultaneously with the longitudinal translatory motion of the measuring device (7) in such a way as to scan the image (I) in its entirety; and
- in that the single signals generated and relayed by the light-transducing elements (74) to the electronic processor (C) are processed by a software program together with other parametric data in such a way as will allow the processor to pilot the selection of suitable colour filters and determine the appropriate illumination for the subsequent printing operation and thus optimize the reproduction of the image (I).

2. A system as in claim 1, wherein the transmission of light from the image (I) through the slot (72) onto the array of light-transducing elements (74) is effected by lateral reflection through 90 , utilizing a mirror (73) angled at 45 or a comparable prism, in conjunction with one or more lenses (75) by which a corresponding discrete portion (ZP) within the transverse zone (Z) of the image (I) compassed by the slot (72) is focused onto each of the light-transducing elements (74).

3. A system as in claim 2, wherein a plurality of spherical lenses (75), one to each light-transducing element (74), can be replaced by a single spherical lens or a single cylindrical lens.

4. A system as in claim 1, wherein the transmission of light from the image (I) through the slot (72) onto the array of light-transducing elements (74) is effected by means of optical fibres.

5. A system as in claim 1, wherein each of the single light-transducing elements (74) is embodied as a triple element composed of three distinct light-transducing elements, each filtered in a corresponding primary colour.
